(19) Europäisches Patentamt

European Patent Office

Office européen des brevets

(11) **EP 1 054 364 A2**

(12) **EUROPÄISCHE PATENTANMELDUNG**

(43) Veröffentlichungstag:
22.11.2000 Patentblatt 2000/47

(51) Int. Cl.7: **G07F 7/10**, H04L 9/32

(21) Anmeldenummer: **00109609.8**

(22) Anmeldetag: **05.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.05.1999 DE 19923807**

(71) Anmelder: **Deutsche Telekom AG**
**53113 Bonn (DE)**

(72) Erfinder:
• **Kehr, Roger**
**64287 Darmstadt (DE)**
• **Posegga, Joachim, Dr.**
**76646 Bruchsal (DE)**
• **Vogt, Harald**
**64289 Darmstadt (DE)**

(54) **Verfahren zur Erhöhung der Sicherheit bei digitalen Unterschriften**

(57) Das erfindungsgemäße Verfahren, welches der Erhöhung der Sicherheit bei digitalen Unterschriften dient, beruht auf der engen Kopplung zwischen Anzeigegerät A und Chipkarte C. Das heißt, die Chipkarte C kennt den öffentlichen Schlüssel des Anzeigegerätes AV und das Anzeigegerät A kennt den öffentlichen Schlüssel der Chipkarte CV.

Erfindungsgemäß werden die vom Anzeigegerät zu übertragenden Daten vor ihrer Übertragung zur Chipkarte (C) mit dem geheimen Schlüssel des Anzeigegerätes (AS) und dem öffentlichen Schlüssel der Chipkarte (CV) verschlüsselt und nach ihrer Übertragung in der Chipkarte (C) mit dem geheimen Schlüssel der Chipkarte (CS) und dem öffentlichen Schlüssel des Anzeigegerätes (AV) wieder entschlüsselt.

Die gewünschte Signatur wird nur dann erzeugt werden, wenn der in der Chipkarte C hinterlegte öffentliche Schlüssel des Anzeigegerätes AV mit dem geheimen Schlüssel des Anzeigegerätes AS korrespondiert.

Fig. 1

**Beschreibung**

Eine digitale Unterschrift wird unter gewissen Voraussetzungen, die gesetzlich geregelt sind, als Ersatz für eine handschriftliche Signatur anerkannt. Zum gesamten Vorgang einer digitalen Unterschrift gehört mindestens die Unterzeichnung eines Dokumentes D, das in elektronischer Form vorliegt, durch einen unterzeichnungswilligen Vertragspartner V1, weiterhin die Verifizierung der Unterschrift durch den Vertragspartner V2, sowie die Ausstellung eines Zertifikates durch eine vertrauenswürdige dritte Instanz VI, welche die Echtheit der Unterschrift des Vertragspartners V1 garantiert.

Das erfindungsgemäße Verfahren bezieht sich auf den Vorgang des Unterzeichnens durch den unterzeichnungswilligen Vertragspartner V1, der nachfolgend als unterzeichnungswilliger Benutzer V1 bezeichnet wird. Dieser leistet die Unterschrift mit Hilfe eines „kryptographischen Tokens", wie beispielsweise einer Chipkarte bzw. Smartcard oder einer ähnlichen geeigneten Einheit. Der unterzeichnungswillige Benutzer V1 wird als Eigentümer der Chipkarte C angesehen und muß sich gegenüber dieser mittels einer Geheimzahl (PIN) oder anderer Verfahren authentisieren, damit die Chipkarte C die Funktionalität zur Unterzeichnung eines Dokuments freischaltet.

Eine Chipkarte C stellt für eine digitale Unterschrift mindestens folgende Funktionalitäten bereit, - VERIFY OWNER: damit identifiziert sich der Besitzer der Chipkarte gegenüber der Karte und autorisiert die Karte, eine digitale Unterschrift zu leisten. Diese Autorisierung kann sich über genau eine Unterschrift oder mehrere Unterschriften im Laufe einer Sitzung erstrecken.

- CREATE SIGNATURE: Vom Kartenterminal werden Daten an die Chipkarte C übertragen, diese werden von der Chipkarte C verschlüsselt (signiert) und die verschlüsselten Daten werden an das Kartenterminal zurück übertragen. Die übertragenen Daten zur Signatur werden auf Terminal-Seite durch einen Hash-Algorithmus aus dem zu signierenden Dokument gebildet, wobei verschiedene Algorithmen gebräuchlich sind; die Verschlüsselung geschieht mit Hilfe eines Public-Key-Verfahrens, wobei ebenfalls mehrere Verfahren in Frage kommen; allgemein benötigt die Chipkarte C einen geheimen Schlüssel CS für die Signatur, der einen korrespondierenden öffentlichen Schlüssel CV besitzt.

Das Leisten einer digitalen Unterschrift bedingt, daß der Unterzeichnende das Dokument D vor dem Unterzeichnen betrachten und prüfen kann und sicher ist, daß er seine Unterschrift unter eben dieses Dokument D setzt.

An einer digitalen Unterschrift sind folgende Komponenten beteiligt:

- der unterzeichnungswillige Benutzer V1,
- eine Chipkarte C mit der beschriebenen Funktionalität; diese Karte befindet sich im Besitz des unterzeichnungswilligen Benutzers V1, was dadurch mm Ausdruck kommt, daß der unterzeichnungswillige Benutzer V1 und die Chipkarte C über ein gemeinsames Geheimnis verfügen (PIN), mit dem sich der unterzeichnungswillige Benutzer V1 gegenüber seiner Chipkarte C identifizieren kann (alternativ dazu sind verschiedene Verfahren denkbar, z.B. biometrische Verfahren wie Fingerabdruckerkennung),
- ein Kartenterminal,
- ein Anzeigegerät (z.B. ein PC), auf dem das Dokument zur Unterschrift angezeigt wird.

Folgende Phasen können bei der Leistung einer digitalen Unterschrift unterschieden werden:

(1) Der unterzeichnungswillige Benutzer V1 betrachtet das Dokument D am Anzeigegerät A, dabei kann er spezifische Funktionen ausführen (z.B. Blättern im Dokument). Er kann den Vorgang auch abbrechen, wenn er nicht gewillt ist, das Dokument D zu unterschreiben.

(2) Der unterzeichnungswillige Benutzer V1 identifiziert sich gegenüber seiner Chipkarte C, dadurch wird die Funktion des Unterschreibens auf der Chipkarte C freigeschaltet, das heißt, die Chipkarte C wird in einen Zustand versetzt, in dem sie bereit ist, ein Dokument D zu empfangen und zu signieren.

(3) Der Hash-Wert h des Dokumentes D wird vom Anzeigegerät A zum Kartenleser und mithin zur Chipkarte C übertragen, die Chipkarte C signiert den Hash-Wert h des Dokumentes D und sendet die Signatur zurück.

(4) Die Signatur wird an den anderen Vertragspartner übermittelt, der sie mit Hilfe eines Zertifikats prüfen kann; weitere Schritte können folgen, die jedoch höchstens noch mittelbar mit der Leistung der digitalen Signatur zu tun haben.

Bekannt ist eine Beschreibung des Schemas zur digitalen Signatur von Patrick Horster, Klaus Keus: Chipkarten als Signier- und Verifizierkomponente. In: Tagungsband *Chipkarten*, P. Horster (Hrsg.). Vieweg-Verlag, 1998. In dieser Veröffentlichung wird die Verwendung von Chipkarten als Signaturkomponenten beschrieben. Dabei wird von der Verwendung von Chipkarten in ihrer herkömmlichen Form ausgegangen, wobei vor der eigentlichen Verschlüsselung keine weitere Prüfung der Herkunft der Daten durchgeführt wird (außer der Benutzer-Identifizierung). Auf spezielle Anzeigegeräte wird bei der o. g. Lösung nicht eingegangen.

In E.-M. Hamann: Digitale Signatur per Chipkarte zur maximalen Sicherheit im Internet, siehe: Tagungsband *Chipkarten*, P. Horster (Hrsg.). Vieweg-Verlag, 1998, wird eine weitere Lösung angeführt, welche die Eigenschaften und die Funktionalität der IBM-Chipkarte für digitale Signaturen beschreibt. Dieser Artikel geht auf die Anbindung von Chipkarten an Systeme ein, die sicherheitsrelevante Funktionen auf die Karte verlagern, u.a. auch Systeme zur digitalen Signatur. In diesem Artikel wird beschrieben, wie über die Chipkarte sichergestellt wird, daß die sicherheitsrelevanten Funktionen in einer vertrauenswürdigen Umgebung laufen. Diese Lösung beruht ebenfalls auf der Identifikation durch den Besitzer (PIN).

In PKCS#11: Cryptographic Token Interface Standard „Cryptoki". RSA Laboratories, Vers. 2.01 (Dezember 1998). http://www.rsa.com/rsalabs/pubs/PKCS ist eine Programmier-Schnittstelle zu Chipkarten beschrieben, um Signaturfunktionen zu nutzen. Dies ist ein ausführlicher Standard zur Benutzung von Chipkarten und ähnlichen Geräten, wobei die Verwaltung mehrere Sitzungen erfordert und die Benutzung von Chipkarten durch mehrere Anwendungen erlaubt wird. Die Sicherheit der Chipkarte, in einer vertrauenswürdigen Umgebung zu laufen, beruht auch hier auf der Besitzeridentifikation.

Im Hinblick auf eine Erhöhung des Vertrauens seitens des Chipkarten-Besitzers und somit zur Steigerung der Sicherheit für den Signierenden ist es bekannt, zur Anzeige des Dokuments ein Gerät zu verwenden, das aufgrund seiner Bauweise, seines Verwahrungsortes oder durch Zertifizierung durch eine vertrauenswürdige Stelle dem unterzeichnungswilligen Benutzer als relativ manipulationssicher erscheint. So soll sichergestellt werden, daß das unterzeichnete Dokument mit dem angezeigten Dokument übereinstimmt. Zudem soll sichergestellt werden, daß keine wesentlichen Teile durch das Anzeigegerät unterdrückt oder in einer Weise verfälscht werden, die den Inhalt des Dokuments verändern. Die Chipkarte soll genau dann eine korrekte Signatur berechnen, wenn die Daten h von einem vertrauenswürdigen Anzeigegerät übertragen werden.

Die Authentisierung des Kartenterminals/Anzeigegeräts gegenüber der Chipkarte erfolgt beispielsweise durch ein herkömmliches Challenge/Response-Verfahren, wie es z.B. in öffentlichen Telefonen und der T-Card angewendet wird. Für Signaturkarten könnte dieses Verfahren in ähnlicher Weise eingesetzt werden. Nachteil dieses Verfahrens ist, daß die Karte nach der Authentisierung in einen Zustand versetzt wird, in dem sie alle eingegebenen Daten zur Signatur akzeptiert. Die Daten selbst werden dann in einem zweiten Schritt übertragen. Dies bietet die Möglichkeit zur Manipulation, indem ein Angreifer zwischen diesen beiden Schritten selbst Daten schickt, die dann fälschlicherweise signiert werden (sog. „Man-in-the-middle Attacke").

Die einfache gegenseitige Authentisierung zwischen Anzeigegerät und Chipkarte kann damit als nicht ausreichend sicher angesehen werden. Diesem Nachteil kann begegnet werden, indem zwischen Chipkarte und Terminal der Mechanismus „Secure Messaging" (Standard bei Chipkarten) eingesetzt wird, bei dem alle Daten verschlüsselt übertragen werden. Als Sitzungsschlüssel wird dabei ein Schlüssel verwendet, der in der Authentisierungsphase vereinbart wird. Ein Nachteil bleibt jedoch auch bei dieser Vorgehensweise bestehen. Dieser Nachteil liegt darin begründet, daß das Anzeigegerät und der Kartenleser grundsätzlich nicht manipulationssicher sind, auch wenn sie sich der Chipkarte gegenüber authentisieren können. So bleibt die Kommunikation zwischen der Chipkarte und dem Kartenleser zwar geschützt, kann jedoch am Anzeigegerät abgefangen werden.

Die der Erfindung zugrunde liegende Aufgabe ist auf ein Verfahren zur Erhöhung der Sicherheit bei digitalen Unterschriften ausgerichtet, bei dem die oben beschriebenen Mängel nicht auftreten.

Die erfindungsgemäße Lösung beruht auf der engen Kopplung zwischen einem vertrauenswürdigen Anzeigegerät A und der Chipkarte C des unterzeichnungswilligen Benutzers V1. Es wird ein Anzeigegerät A vorausgesetzt, welches sich zumindest unter Kontrolle des Besitzers der Chipkarte C (unterzeichnungswilliger Benutzer V1) befindet und damit als manipulationssicher und besonders vertrauenswürdig gelten kann. Die enge Kopplung zwischen Anzeigegerät A und Chipkarte C wird erfindungsgemäß dadurch erreicht, daß jeder Seite der öffentliche Schlüssel der anderen Seite bekannt gemacht wird, bzw. bekannt ist. Das heißt, die Chipkarte C kennt den öffentlichen Schlüssel des Anzeigegerätes AV und das Anzeigegerät A kennt den öffentlichen Schlüssel der Chipkarte CV. Um diesen Sachverhalt zur Erhöhung der Sicherheit der digitalen Unterschrift ausnutzen zu können, wird die Funktionalität einer herkömmlichen Chipkarte C angepaßt. In der Chipkarte C wird zusätzlich zu den bisherigen Komponenten der öffentliche Schlüssel des Anzeigegerätes AV abgelegt.

Die Funktion CREATE SIGNATURE wird dahingehend erweitert, daß vor der Erzeugung der Signatur die vom Anzeigegerät A empfangenen Daten mit dem in der Chipkarte C hinterlegten öffentlichen Schlüssel des Anzeigegerätes AV entschlüsselt werden.

Die Chipkarte C erwartet neben dem mit dem geheimen Schlüssel des Anzeigegerätes AS verschlüsselten Hashwert des Dokumentes h zusätzlich die verschlüsselte PIN des unterzeichnungswilligen Benutzers V1.

Die PIN-Eingabe des unterzeichnungswilligen Benutzers V1 erfolgt am vertrauenswürdigen Anzeigegerät A. Der Wert der PIN geht in die Verschlüsselung mit ein.

Auf das Dokument D wird eine Hash-Funktion angewendet. Ergebnis ist der Hash-Wert des Dokumentes h. Die PIN wird hier bereits als gegeben vorausgesetzt. In der Praxis wird der unterzeichnungswillige Benutzer V1 beispielsweise über das Anzeigegerät A aufgefordert, die PIN einzugeben, oder sie ist noch von einer vorhergehenden Sitzung im Anzeigegerät A gespeichert. Auf das Wertepaar aus PIN und Hash-Wert h wird die Verschlüsselungsfunktion mit dem geheimen Schlüssel des Anzeigegerätes AS angewendet.

Die oben beschriebene Verfahrensweise wird anhand eines Ausführungsbeispiels für den Ablauf der Erzeugung einer Signatur anhand der nachfolgenden Verfahrensschritte näher erläutert.

1. Der unterzeichnungswillige Benutzer V1 bekundet sein Einverständnis zur Bildung der digitalen Signatur gegenüber dem vertrauenswürdigen Anzeigegerät A durch eine dementsprechende Eingabe.

2. Der unterzeichnungswillige Benutzer V1 gibt nach Aufforderung seine PIN am Anzeigegerät A ein.

3. Das Anzeigegerät A bildet über eine Hash-Funktion den Hash-Wert h des zu signierenden Dokumentes D.

4. Das Anzeigegerät A erzeugt ein Datum aus dem Hash-Wert h und der PIN und verschlüsselt dieses Datum mit dem geheimen Schlüssel des Anzeigegerätes AS und dem im Anzeigegerät hinterlegten öffentlichen Schlüssel der Chipkarte CV.

5. Das Kommando CREATE SIGNATURE wird durch das Anzeigegerät A initiiert und das verschlüsselte Datum M = V [C](S[A](h,PIN)) wird zur Chipkarte C übertragen.

7. Die Chipkarte C entschlüsselt das Datum mit dem geheimen Schlüssel der Chipkarte CS und dem in der Chipkarte C hinterlegten öffentlichen Schlüssel des Anzeigegerätes AV, so daß der Hash-Wert des Dokumentes h und die PIN wieder einzeln vorliegen.

8. Die Chipkarte C prüft die Korrektheit der PIN und schaltet bei Übereinstimmung der vom Anzeigerät A übertragenen PIN mit der in der Chipkarte C hinterlegten PIN die Funktion zur Erzeugung der Signatur frei.

9. Die Chipkarte C verschlüsselt den Hash-Wert des Dokumentes h mit dem geheimen Schlüssel der Chipkarte CS zur Signatur des Dokumentes D.

10. Die Signatur des Dokumentes D wird zum Anzeigegerät A übertragen, das Dokument D ist damit signiert.

Das beschriebene Verfahren verbessert die Sicherheit bei der digitalen Signatur von Dokumenten. Eine Komponente, die zur Erhöhung der Sicherheit gegenüber einem Fremdangriff beiträgt, beruht darauf, daß die PIN nunmehr am vertrauenswürdigen Anzeigegerät A eingegeben werden kann und nicht mehr am Händler-Terminal oder am Kartenleser direkt eingegeben werden muß. Ein weiterer Sicherheitsfaktor beruht auf der verschlüsselten Übertragung der PIN vom vertrauenswürdigen Anzeigegerät A zur Chipkarte C.

Das erfindungsgemäße Verfahren zeichnet sich dadurch aus, daß das Dokument D nur dann mit der gewünschten Signatur unterzeichnet wird, wenn der in der Chipkarte C hinterlegte öffentliche Schlüssel des Anzeigegerätes AV mit dem geheimen Schlüssel des Anzeigegerätes AS abgestimmt ist. Durch diese Verfahrensweise wird insbesondere die Vertrauenswürdigkeit des Anzeigegerätes A für den unterzeichnungswilligen Benutzer V1 erhöht, da es ganz besonders bei der Darstellung der Daten eine bessere Sicherheit gegen einen Angreifer bietet als die bisher bekannten Verfahren. Durch die enge Kopplung zwischen Anzeigegerät A und Chipkarte C wird das Vertrauen in das Anzeigegerät A wesentlich erhöht. Die Chipkarte C des unterzeichnungswilligen Benutzers V1 wird in den Zustand versetzt, daß sie nur Daten von diesem bestimmten Anzeigegerät A akzeptiert. Das setzt voraus, daß das Anzeigegerät A immer unter der direkten Kontrolle des Benutzers der Chipkarte C steht. Beispielsweise kann das Anzeigegerät A als tragbares Gerät ausgebildet sein.

Durch die Verwendung kryptografischer Funktionen wird einerseits die Authentizität des Anzeigegerätes A sichergestellt, und andererseits die Vertraulichkeit der zwischen Anzeigegerät A und Chipkarte C übertragenen Daten gesichert.

Dabei spielt insbesondere die Datenübertragung vom Anzeigegerät zur Chipkarte C eine Rolle, während die Daten, die die Chipkarte C als Signatur ausgibt, nicht vor unbefugter Einsicht oder Manipulation geschützt werden müssen, da dort keine Zugriffsmöglichkeiten durch einen Angreifer gegeben sind.

Die Sicherheit des erfindungsgemäßen Verfahrens wird dadurch gewährleistet, daß der mit dem geheimen Schlüssel des Anzeigegerätes AS verschlüsselter Hash-Wert h eines Dokumentes D, der zur Chipkarte C übertragen wurde, mit dem in der Chipkarte C hinterlegten öffentlichen Schlüssel des Anzeigegerätes AV entschlüsselt wird. Dabei entsteht wieder ein unverschlüsselter Hash-Wert h, der nur dann mit dem Hash-Wert h des Dokumentes D übereinstimmt, wenn der geheime Schlüssel des Anzeigegerätes AS mit dem in der Chipkarte C hinterlegten öffentlichen Schlüssel des Anzeigegerätes AV korrespondiert. Wurde das Dokument D jedoch von einem Anzeigegerät A mit einem geheimen Schlüssel verschlüsselt, welcher nicht auf den in der Chipkarte C hinterlegten öffentlichen Schlüssel des Anzeigegerätes AV abgestimmt ist, so ist der durch die Entschlüsselung mittels des öffentlichen Schlüssels des Anzeigegerätes AV entstehende Wert nur ein einer Zufallszahl vergleichbares Datum, das nicht sinnvoll einem echten Dokument D zugeordnet werden kann. Die Signatur, die die Chipkarte C daraus durch Verschlüsselung mit dem geheimen Schhlüssel der Chipkarte CS bildet, stellt daher keine Signatur für das Ursprungsdokument D dar. Dies kann leicht erkannt werden, indem auf die von der Chipkarte C gelieferte Signatur die Entschlüsselungsfunktion mit dem öffentlichen Schlüssel der Chipkarte CV angewendet wird. Erhält man durch diese Berechnung den Hash-Wert h des Dokuments D, so stellt die Signatur tatsächlich eine Signatur des Dokuments D dar. Erhält man dagegen einen anderen Wert, so ist die Signatur nicht gültig.

Wenn zu dem mit dem geheimen Schlüssel des Anzeigegeräts AS verschlüsselten Hash-Wert h des Dokumentes D auch noch der Hash-Wert h des Dokumentes D im Klartext zur Chipkarte C übertragen wird, kann zusätzlich über die Chipkarte C geprüft werden, ob der verschlüsselte Hash-Wert h tatsächlich von dem bestimmten Anzeigegerät A übertragen wurde. Wenn der mittels des öffentlichen Schlüssels des Anzeigegerätes AV aus dem verschlüsselten Hash-Wert h entschlüsselte Hash-Wert h nicht mit dem im Klartext zur Chipkarte C übertragenen Hash-Wert h übereinstimmt, ist davon auszugehen, daß der von der Chipkarte C empfangene verschlüsselte Hash-Wert h nicht von dem vertrauenswürdigen Anzeigegerät A übertragen wurde. Die Chipkarte C kann in diesem Fall über eine Fehlerfunktion eine Fehlermeldung erzeugen. Die zusätzliche Übertragung des unverschlüsselten Hash-Wertes h ist damit eine Variante, die zusätzlich eine Fehlerbehandlung erlaubt.

Durch diese Verfahrensweise ist abgesichert, daß die Chipkarte C eine korrekte Signatur für das Dokument D nur dann berechnet, wenn der übertragene verschlüsselte Hash-Wert h des Dokumentes D auch von dem bestimmten vertrauenswürdigen Anzeigegerät A erzeugt wurde.

Das erfindungsgemäße Verfahren macht einen gesonderten zusätzlichen Nachrichtenaustausch zur Authentisierung des Anzeigegerätes A gegenüber der Chipkarte C überflüssig, da die Authentisierung durch die Verschlüsselung mittels des geheimen Schlüssels AS des Anzeigegerätes A erfolgt.

Eine weitere Verbesserung der Sicherheit des oben beschriebenen Verfahrens wird in der Einbeziehung einer Zufallszahl in die Verschlüsselungsfunktion gesehen, welche mittels eines Challenge/Response-Verfahrens zwischen der Chipkarte C und dem Anzeigegerät A ausgetauscht wird. Der Austausch einer Zusatzzahl ist insbesondere dann sinnvoll, wenn die Länge des Datenblockes aus PIN und Hashwert h so gering ist, daß sie keine ausreichende Sicherheit gegenüber von kryptografischen Angriffen bietet.

Zur Nutzung dieses Verfahrens fordert das Anzeigegerät A von der Chipkarte C eine Zufallszahl an. Diese Zufallszahl wird von der Chipkarte C mit dem in der Chipkarte C hinterlegten öffentlichen Schlüssel des Anzeigegerätes AV verschlüsselt und zum Anzeigegerät A übertragen. Im Anzeigegerät A wird die verschlüsselte Zufallszahl mittels des im Anzeigegerät A hinterlegten geheimen Schlüssel des Anzeigegerätes AS wieder entschlüsselt. Der bereits im Anzeigegerät A erzeugte Datenblock aus PIN und Hash-Wert h wird vor der Verschlüsselung mit dem geheimen Schlüssel des Anzeigegerätes AS mit der Zufallszahl verknüpft.

Für die Korrespondenz zwischen Chipkarte C und dem Anzeigegerät A sind verschiedene Konfigurationen denkbar. Eine Chipkarte C könnte beispielsweise genau einem Anzeigegerät A zugeordnet sein, wobei dann die Chipkarte C eben nur mit diesem einen Anzeigegerät A zusammen zur Signierung von Dokumenten D verwendet werden kann. Alternativ könnte ein Schema verwendet werden, in dem jedem Anzeigegerät A eine eindeutige Nummer zugeordnet wird. Diese Nummer wird mit einem Master-Key verschlüsselt ebenfalls im Anzeigerät A abgelegt (abgeleiteter Schlüssel; wird z.B. auch im T-Card-Bereich verwendet). Die Karte kennt den Master-Key und kann damit die Authentizität des Anzeigegeräts A (indirekt oder direkt) prüfen.

**Aufstellung der Bezugszeichen**

| | |
|---|---|
| V1 | Vertragspartner 1/ unterzeichnungswilliger Benutzer |
| V2 | Vertragspartner 2 |
| VI | vertrauenswürdige Instanz |
| A | Anzeigegerät |
| C | Chipkarte |
| D | zu signierendes Dokument/Dokumentdaten |
| h | Hash-Wert des Dokuments/der Dokumentdaten |
| PIN | persönliche Geheimzahl des Kunden (Personal Identification Number) |
| AV | der Chipkarte zugeordneter öffentlicher Schlüssel des Anzeigegerätes |
| AS | geheimer Schlüssel des Anzeigegerätes |
| CV | dem Anzeigegerät zugeordneter öffentlicher Schlüssel der Chipkarte |
| CS | geheimer Schlüssel der Chipkarte |
| V | Entschlüsselungsfunktion |
| v | Verifikationsfunktion, die ein Paar aus Signatur und Schlüssel auf ein Datum abbildet |
| S | Verschlüsselungsfunktion/Signaturerzeugung |
| s | Signaturfunktion, die ein Paar, bestehend aus einem Datum und Schlüssel auf eine Signatur, abbildet |
| x | Daten, die der Chipkarte übergeben werden. |

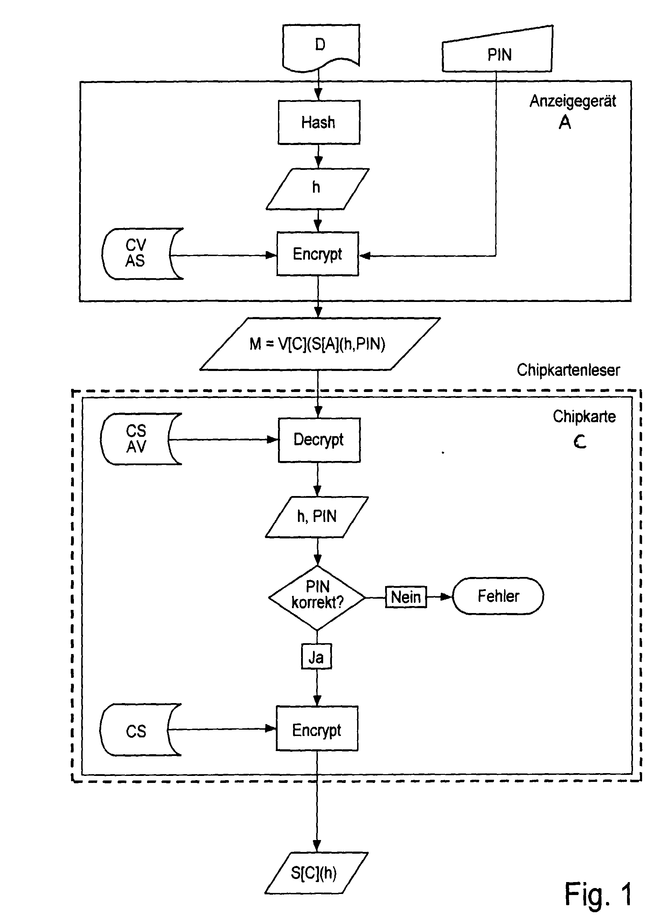

**Patentansprüche**

1. Verfahren zur Erhöhung der Sicherheit bei digitalen Unterschriften unter Einbeziehung eines kryptografischen Tokens, wie beispielsweise einer Chipkarte (C) und eines Anzeigegerätes (A), wobei der unterzeichnungswillige Benutzer (V1) sich mit der PIN seiner Chipkarte (C) ausweist und bei dem der Hash-Wert des zu unterzeichnenden Dokumentes (h) nach der Verschlüsselung mit dem geheimen Schlüssel des Anzeigegerätes (AS) zur Chipkarte (C) übertragen wird, und daß nach Prüfung der PIN die Freigabe zur Erzeugung der digitalen Signatur erfolgt,

**dadurch gekennzeichnet**,

- daß im Anzeigegerät (A) nach der Bildung des Hash-Wertes des zu verschlüsselnden Dokumentes (h) ein Datum aus dem Hash-Wert des Dokumentes (h) und der vom unterzeichnungswilligen Benutzer (V1) über das Anzeigegerät (A) eingegebenen PIN gebildet wird, welches mit dem geheimen Schlüssel des Anzeigegerätes (AS) und dem im Anzeigegerät hinterlegten öffentlichen Schlüssel der Chipkarte (CV) verschlüsselt und anschließend zur Chipkarte (C) übertragen wird,

- daß das verschlüsselte Datum $M=V[C](S[A](h,PIN))$ mittels des geheimen Schlüssels (CS) der Chipkarte (C) und des in der Chipkarte (C) hinterlegten öffentlichen Schlüssels des Anzeigegerätes (AV), welcher mit dem geheimen Schlüssel des Anzeigegerätes (AS) korrespondiert, wieder entschlüsselt wird, so daß der Hashwert des Dokumentes (h) und die PIN wieder einzeln vorliegen, und daß bei Übereinstimmung der übertragenen PIN mit der PIN der Chipkarte (C) die Funktion zur Erzeugung der Signatur $S[C](h)$ freigeschaltet wird.

2. Verfahren nach Anspruch 1, dadurch gekennzeichnet, daß neben den verschlüsselt zur Chipkarte (C) übertragenen Daten der Hash-Wert des zu verschlüsselnden Dokumentes (h) zur zusätzlichen Kontrolle unverschlüsselt zur Chipkarte (C) übertragen wird.

3. Verfahren nach Anspruch 1, dadurch gekennzeichnet,
daß nach der Bildung des Hash-Wertes des Dokumentes (h) und der Abfrage der PIN durch das Anzeigegerät (A) von der Cipkarte (C) eine Zufallszahl angefordert wird,

- daß die angeforderte Zufallszahl mit dem in der Chipkarte (C) hinterlegten öffentlichen Schlüssel des Anzeigegerät (AV) verschlüsselt und zum Anzeigegerät (A) übertragen wird,
- daß die Zufallszahl mittels des geheimen Schlüssels des Anzeigegerätes (AS) wieder entschlüsselt wird, und
- daß die Zufallszahl mit dem Hash-Wert des Dokuments (h) und der PIN zu einem Datum zusammengefaßt, mittels des geheimen Schlüssels des Anzeigegerätes (AS) und des im Anzeigegerät hinterlegten öffentlichen Schlüssel der Chipkate (CV) verschlüsselt und anschließend zur Chipkarte (C) übertragen wird.

Fig. 1